Europäisches Patentamt

European Patent Office

Office européen des brevets

(19)

(11) Numéro de publication : **0 686 658 A1**

(12) **DEMANDE DE BREVET EUROPEEN**

(21) Numéro de dépôt : 95401313.2

(22) Date de dépôt : 07.06.95

(51) Int. Cl.$^6$ : **C08G 69/48,** C08L 101/10, C08K 5/54

(30) Priorité : 08.06.94 FR 9406999

(43) Date de publication de la demande : 13.12.95 Bulletin 95/50

(84) Etats contractants désignés : DE FR GB IT

(71) Demandeur : **ELF ATOCHEM S.A. 4 & 8, Cours Michelet La Défense 10 F-92800 Puteaux (FR)**

(72) Inventeur : **Breant, Patrice 2, Parc Maubuisson F-27470 Serquigny (FR)**

(54) **Polyamides à performances thermomécaniques améliorées, leur procédé de préparation et leur utilisation après réticulation**

(57) La présente invention concerne des polyamides thermoplastiques et des élastomères thermoplastiques à base de polyamide à performances thermomécaniques améliorées. Ils sont obtenus par greffage le long de la chaîne polymère avec des alcoxysilanes présentant au moins une insaturation, et notamment les vinyltrialcoxysilanes de formule $CH_2=CH\text{-}Si\text{-}(OR)_3$ où R représente un groupement alkyle éventuellement substitué par un groupement alcoxyle.

Le rapport pondéral des greffons au polymère greffé est en général compris entre 0,1 et 5 %.

Ces polyamides greffés peuvent être réticulés par hydrolyse à la vapeur d'eau à 100 °C ou par contact avec de l'eau.

Les polyamides greffés et éventuellement réticulés peuvent être utilisés pour la réalisation d'objets moulés, extrudés tels que des tubes, gaines, films mono- et multicouches, pièces complexes, et de poudre pour le revêtement de substrats.

EP 0 686 658 A1

Jouve, 18, rue Saint-Denis, 75001 PARIS

La présente invention a pour objet des polyamides thermoplastiques (PA) à performances thermomécaniques améliorées. Les polyamides thermoplastiques commerciaux, par exemple tels que le PA-11 ou le PA-12 de masse moléculaire moyenne en nombre comprise entre 10.000 et 30.000, sont utilisables notamment sous forme d'objets moulés ou extrudés présentent une tenue dimensionnelle à la chaleur limitée par exemple inférieure à 50 °C pour PA-11 (température de fléchissement sous charge de 1,85 MPa mesurée suivant la norme ISO 75) et à 55 °C pour le PA-12, un gonflement au contact de certains solvants, et du méthanol en particulier, non négligeable et une tenue à l'hydrolyse plutôt moyenne.

On a essayé de remédier aux inconvénients des polyamides énoncés ci-dessus par différentes méthodes, en particulier l'amélioration des propriétés énoncées ci-dessus peut être obtenue grâce à la réticulation. Cependant, la réticulation classique à l'aide d'initiateurs radicalaires est impossible dans le cas des PA à cause de leur température de mise en oeuvre élevée, température à laquelle se produit une décomposition prématurée de l'initiateur lors de son incorporation dans les PA à l'état fondu au sein de l'extrudeuse.

Cependant, les PA ont pu être modifiés chimiquement en bout de chaîne par des produits pouvant induire ultérieurement la réticulation des polymères, comme des produits silylés :
- dans J59-174 674 au nom de KAO Corp où on a fait réagir préalablement des PA à terminaisons amines et/ou vinyliques avec des vinylalcoxysilanes
- dans J60-233 132 au nom de KAO Corp, des PA à terminaison amine ont été réticulés après action d'acryloxyalcoxysilanes
- dans DE-3545032 au nom de EMS-Inventa AG où on a fait préalablement réagir les PA avec des alcoxysilanes portant diverses fonctions réactives comme des fonctions epoxydes, isocyanates, anhydrides, etc...

On a également proposé de mélanger les PA avec des polyoxyphénylènes (PPO) dans J62-232 455 au nom de ASAHI CHEMICAL INDUSTRY Co, dans EP 182 163 au nom de GENERAL ELECTRIC Co pour améliorer leurs propriétés mécaniques après greffage et réticulation.

La demanderesse a mis au point des polyamides thermoplastiques greffés le long de la chaîne polymère avec des alcoxysilanes présentant au moins une insaturation et qui peuvent être aisément réticulés. Les polyamides selon l'invention contiennent des motifs aliphatiques et/ou cycloaliphatiques et/ou aromatiques, sont éventuellement copolymérisés mais ne présentent pas les modifications chimiques postérieures à leur polycondensation et préalables à leur greffage telles que décrites dans l'état de la technique mentionné ci-dessus.

Par polyamide ou PA selon l'invention, on entend également des élastomères thermoplastiques (TPE) à base de polyamide qui sont des copolymères blocs, appelés aussi polyétheramides, dont les séquences rigides sont constituées de polyamide et les séquences souples cristallisables de polyéther.

Les PA peuvent également être plastifiés à l'aide d'additifs couramment utilisés pour ce genre de modification. Ils peuvent chargés et/ou contenir divers additifs, par exemple des additifs destinés à protéger le PA contre la thermo-oxydatation, la thermo-UV-dégradation, etc.

Le rapport pondéral des greffons au polymère greffé est en général compris entre 0,1 et 5 %.

Parmi les alcoxysilanes portant une insaturation dont dérivent les greffons, on peut citer les vinyltrialcoxysilanes de formule $CH_2=CH-Si-(OR)_3$ où R représente un groupement alkyle ou éventuellement substitué par un groupement alcoxyle. On peut notamment citer :

$CH_2=CH-Si-(OCH_3)_3$      vinyltriméthoxysilane (VTMO)
$CH_2=CH-Si-(OCH_2CH_3)_3$      vinyltriéthoxysilane (VTEO)
$CH_2=CH-Si-(OCH_2OCH_2CH_3)_3$      vinyltriméthoxyéthoxysilane (VTMOEO).

Parmi les alcoxysilanes portant une insaturation dont dérivent les greffons, on peut également citer les ((meth)acryloxyalkyl)trialcoxysilanes et notamment le (3-(methacryloxy)propyl)triméthoxysilane.

L'invention concerne également un procédé de préparation des polyamides thermoplastiques et des élastomères greffés définis précédemment.

On procède au greffage à l'état fondu des PA en présence d'initiateur(s) radicalaire(s), les PA étant préalablement polymérisés, par exemple par polycondensation ou polyaddition.

La réaction de greffage est mise en oeuvre dans une extrudeuse mono ou double vis alimentée par du PA dans une trémie d'alimentation, par exemple sous forme de granulés dans une première zone de l'extrudeuse, on procède à la fusion du PA par chauffage et dans une seconde zone, on introduit les réactifs au sein de la masse fondue de PA.

Les initiateurs radicalaires peuvent être choisis parmi les peroxydes, peracides, peresters, peracétals. On les utilise en général à raison de 0,01% à 0,5% en masse par rapport au PA à greffer.

A titre d'exemple, on peut citer
- le peroxyde de dicumyle (DICUP),
- le 2,5-diméthyl 2,5-ditertiobutylperoxyhexane (DHBP)
- le 1,3-bis(tertiobutylperoxyisopropyl) benzène (Y1490).

On préfère dissoudre l'initiateur radicalaire dans le vinylalcoxysilane liquide avant de les introduire, par exemple au moyen d'une pompe doseuse, dans le PA à l'état fondu.

La demanderesse a remarqué que l'on procède avantageusement à l'introduction des réactifs, ainsi qu'à leur mélange, dans les PA en état de surfusion, c'est-à-dire à une température inférieure à la température de fusion des PA et ce, afin d'éviter un déclenchement intempestif et incontrôlé de la réaction. On préfère que la zone d'introduction des réactifs soit suffisament longue et à une température suffisamment basse pour assurer une bonne dispersion des réactifs et une décomposition thermique de l'initiateur radicalaire la plus faible possible.

La réaction de greffage proprement dite a lieu dans une troisième zone de l'extrudeuse à une température apte à assurer la décomposition totale de l'initiateur radicalaire avant la sortie de la masse fondue en tête d'extrudeuse, une zone de dégazage est prévue où les produits de décomposition de l'initiateur et le vinylsilane qui n'a pas réagi sont dégazés par exemple sous vide.

On récupère le PA greffé en sortie d'extrudeuse par exemple sous forme de joncs granulés après refroidissement sous air froid.

Afin de limiter l'auto-échauffement de la masse fondue, on préfère travailler à vitesse de vis réduite; la demanderesse a noté qu'une vitesse de vis supérieure à 100 tours/minute pour un débit constant de 5 kg/h nuit particulièrement au bon déroulement de la réaction de greffage (emballement de la réaction).

Le rendement de greffage est compris entre 1 et 100 % suivant les conditions opératoires. La demanderesse a noté que le rendement de greffage dépend du débit d'extrusion et de la vitesse de la vis : à titre d'illustration, pour un débit au sein de l'extrudeuse de 5 kg/h, le rendement est faible (compris entre 10 et 20 %), alors que lorsque le débit est limité à 4 kg/h, le rendement de greffage devient supérieur à 30 %. Il est donc possible d'augmenter ce rendement en diminuant la vitesse de la vis d'une part, et le débit de l'extrudeuse d'autre part.

L'invention a également pour objet les polyamides greffés et réticulés ainsi que leur procédé de réticulation. Ces polyamides réticulés peuvent être utilisés pour la fabrication d'objets moulés ou extrudés, tels que des tubes, gaines, films mono- et multicouches, pièces complexes, et de poudre pour le revêtement de substrats. Ils sont obtenus par hydrolyse à la vapeur d'eau à 100 °C ou par contact avec de l'eau. On améliore notablement la cinétique d'hydrolyse des fonctions alcoxysilanes, et donc la cinétique de réticulation, par incorporation au moment du greffage du PA d'un catalyseur tel que le dilaurate de dibutyl étain.

On évalue le degré de réticulation des PA greffés selon l'invention en mesurant le taux d'insolubles à 90 °C dans le métacrésol. On considère qu'un produit bien réticulé présente un taux d'insolubles de 80 %.

Dans tous les exemples la viscosité en solution est mesurée dans le métacrésol à 20°C en solution à 0.5g de polyamide pour 50 ml de solvant et exprimée en dl/g.

## EXEMPLES 1 A 13

### greffage de PA-11 dans des conditions opératoires différentes

Le PA que l'on a greffé est un PA-11 de $\overline{Mn}$ 13.000 et de viscosité en solution d'environ 1 dl/g.

Le greffage a été mis en oeuvre dans 2 extrudeuses avec des profils différents :

❶ l'une présente un profil de températures faiblement incliné et une vitesse de vis de 130 tr/min, la température affichée est comprise entre 210 et 220 °C.

❷ la seconde présente un profil en cuvette tel que défini ci-dessous et une vitesse de vis de 130 tr/min ou de 50 tr/min :

| Type de zone | zone de fusion | introduction des réactifs | réaction de greffage | zone de dégazage | | tête |
|---|---|---|---|---|---|---|
| Température matière | 200 °C | 180 °C | 225 °C | 220 °C | 210 °C | 205 °C |

Dans le Tableau 1 sont répertoriés
- le type d'extrudeuse et sa vitesse de vis,
- la nature de l'initiateur radicalaire et sa quantité exprimée en % en poids par rapport au PA à greffer,
- la nature et la quantité de vinylalcoxysilane introduit et greffé exprimée en % en poids par rapport au PA à greffer,
- le rendement de greffage.

Tableau 1

| Ex | extrudeuse vitesse vis | nature de l'initiateur | % initiateur | nature du silane | % silane introduit | % silane greffé | rendement greffage (%) |
|---|---|---|---|---|---|---|---|
| 1 | ❶ 130 tr/min | DHBP | 0,05 | VTMO | 1 | 0.32 | 32 |
| 2 | ❶ 130 tr/min | DICUP | 0,05 | VTMO | 1 | 0.07 | 7 |
| 3 | ❶ 130 tr/min | DHBP | 0,05 | VTMO | 2 | réticulé | réticulé |
| 4 | ❷ 50 tr/min | DHBP | 0,05 | VTMO | 1 | 0,40 | 40 |
| 5 | ❷ 50 tr/min | DICUP | 0,05 | VTMO | 1 | 0,35 | 35 |
| 6 | ❷ 50 tr/min | DHBP | 0,05 | VTMO | 2 | 0,62 | 31 |
| 7 | ❷ 50 tr/min | DICUP | 0,05 | VTEO | 2,6 | 1.1 | 41 |
| 8 | ❷ 50 tr/min | DHBP | 0,29 | VTEO | 2,6 | 1,1 | 41 |

TABLEAU I (suite)

| 9 | ❷ 50 tr/min | Y1490 | 0,32 | VTEO | 2,6 | 1,08 | 40 |
|---|---|---|---|---|---|---|---|
| 10 | ❷ 50 tr/min | DICUP | 0,05 | VTMOEO | 3,8 | 1,81 | 47 |
| 11 | ❷ 50 tr/min | DHBP | 0,29 | VTMOEO | 3,8 | 1,68 | 44 |
| 12 | ❷ 50 tr/min | Y1490 | 0,32 | VTMOEO | 3,8 | 1,84 | 48 |
| 13 | ❷ 130 tr/min | DICUP | 0,05 | VTMO | 2 | 0,19 | 10 |

## EXEMPLES 14 A 16

### greffage de PA-11 de masse moléculaire variable

Les PA que l'on a greffés sont un PA-11 de $\overline{Mn}$ 11.400 et de viscosité en solution d'environ 0,9 (exemple 14), un PA-11 de $\overline{Mn}$ 22.000 et de viscosité en solution d'environ 1,5 (exemple 15) et un PA-11 de $\overline{Mn}$ 19.200 et de viscosité en solution d'environ 1,35 (exemple 16).

On utilise 0,05% en poids par rapport au PA-11 à greffer de peroxyde de dicumyle comme initiateur radicalaire et on greffe du vinyltriméthoxysilane (VTMO) sur le PA-11.

L'extrudeuse utilisée est de type ❷ (profil cuvette ; double vis) ; sa vitesse de vis est de 50 tr/min.
Dans le Tableau 2 sont répertoriés
- la quantité de vinyltriméthoxysilane (VTMO ) introduit et greffé exprimée en % en poids par rapport au PA à greffer,
- le rendement de greffage.
Les résultats sont réunis dans le tableau 2.

Tableau 2

| Ex | % VTMO introduit | % VTMO greffé | rendement greffage (%) |
|---|---|---|---|
| 14 | 0.91 | 0,29 | 26,5 |
| 15 | 0.93 | 0,28 | 26 |
| 16 | 0.78 | 0,16 | 20,5 |

### EXEMPLES 17 A 22

### greffage de PA12

Le PA que l'on a greffé est un PA-12 de $\overline{\mathrm{Mn}}$ 11.500 et de viscosité en solution d'environ 0,9. L'extrudeuse utilisée est de type ❷ (profil cuvette ; double vis); sa vitesse de vis est de 50 tr/min.

Dans le Tableau 3 sont répertoriés :
- la nature de l'initiateur radicalaire et sa quantité exprimée en % en poids par rapport au PA à greffer
- la nature et la quantité de silane introduit et greffé exprimée en % en poids par rapport au PA à greffer,
- le rendement de greffage.

Tableau 3

| Ex | nature de l'initiateur | % initiateur | nature du silane | % silane introduit | % silane greffé | rendement greffage (%) |
|---|---|---|---|---|---|---|
| 17 | DICUP | 0,05 | VTEO | 2,5 | 0,79 | 32 |
| 18 | DHBP | 0,29 | VTEO | 2,15 | 0,75 | 35 |
| 19 | Y1490 | 0,32 | VTEO | 2,60 | 0,92 | 35 |
| 20 | DICUP | 0,05 | VTMOEO | 3,51 | 1,68 | 48 |
| 21 | DHBP | 0,29 | VTMOEO | 3,8 | 1,77 | 47 |
| 22 | Y1490 | 0,32 | VTMOEO | 3,7 | 1,56 | 43 |

### Evaluation de la facilité de mise en oeuvre des PA greffés

Pour évaluer la facilité de mise en oeuvre ultérieure des PA greffés, on évalue leur viscosité en mesurant leur Melt Index (M I) (sous charge1 kg/235 °C) après les avoir séchés sous vide à température ambiante.

Pour les PA greffés non séchés dont le taux de greffage est supérieur à 0,6 % en masse par exemple de VTMO, on ne peut mesurer le Melt Index car, dans les conditions de mesure, les PA greffés se réticulent et deviennent ingradables.

A titre comparatif, on a également indiqué le Melt Index de 4 PA-11 non greffés de même $\overline{\mathrm{Mn}}$. Les résultats sont réunis dans le tableau 4.

Tableau 4

| Ex | 5 | 13 | PA-11 $\overline{\mathrm{Mn}}$ 13.000 | 14 | PA-11 $\overline{\mathrm{Mn}}$ 11400 | 15 | PA-11 $\overline{\mathrm{Mn}}$ 22.000 | 16 | PA-11 $\overline{\mathrm{Mn}}$ 9.400. |
|---|---|---|---|---|---|---|---|---|---|
| MI | 14,7 | 25 | 36,1 | 22,5 | 35,7 | 5,5 | 15,4 | 2,6 | 22,3 |

### Réticulation des PA greffés

L'amélioration de la tenue dimensionnnelle à la chaleur et de la tenue aux solvants des PA greffés est mesurée après réticulation.

Les PA greffés précédents sont réticulés par hydrolyse à la vapeur d'eau à 100 °C pendant 12 h. On constate que la réticulation maximale est atteinte après 12h mais ce temps optimum dépend des conditions de température et de la présence éventuelle d'un catalyseur approprié.

On mesure le taux d'insolubles (ou de gel ) à 90 °C dans le métacrésol. Ce taux de gel est évalué par différence de masse après 6 heures au contact du solvant.

On évalue la tenue à la déformation sous charge à chaud des PA réticulés sur des éprouvettes injectées suivant la norme ISO R527 1/2. L'allongement de l'éprouvette à la température désirée et sous une contrainte désirée est suivi en fonction du temps et mesurée après 1 heure.

A titre comparatif, on mesure le taux de gel et la tenue à la déformation à chaud de PA-11 de $\overline{Mn}$ 13.000 et de PA-12 de $\overline{Mn}$ 11.500 ni greffés ni réticulés utilisés pour le greffage des PA des exemples 6, 8, 12, 19 et 21 .

Les résultats sont réunis dans le tableau 5.

Tableau 5

| PA réticulé à partir du PA greffé de l'Ex | | | | | PA-11 | | | PA-12 |
|---|---|---|---|---|---|---|---|---|
| PA greffé de l'Ex | | 6 | 8 | 12 | $\overline{Mn}$.13.000 | 19 | 21 | $\overline{Mn}$.11.500 |
| taux de gel (%) | | 73,2 | 77,6 | 75,6 | 0 | 81,4 | 81,6 | 0 |
| fluage (%) | 135 °C/1h 2 MPa | non mesuré | 1,2 | non mesuré | 1,8 | 1,3 | 0,4 | 2 |

## EXEMPLES 23 ET 24

## COMPARATIFS SELON DE 3.545.032

Selon DE 3.545.032, on greffe en bout de chaîne un PA-11 de $\overline{Mn}$ 13.000 (exemple 23) et un PA-12 de $\overline{Mn}$ 11.500 (exemple 24) avec un alcoxysilane portant une fonction époxy tel que le glycidyl-3oxypropyltriméthoxysilane (GLYMO) dans une extrudeuse de type ❷ (profil cuvette ; double vis) avec une vitesse de vis de 50 tr/min et un profil de température identique à celui des exemples 1 à 13.

On compare l'aptitude à la réticulation et la tenue à l'hydrolyse des PA ainsi greffés, des PA-11 et PA-12 greffés des exemples 12 et 19 et de PA-11 et PA-12 non greffés de même Mn. L'aptitude à la réticulation et la tenue à l'hydrolyse sont évaluées en mesurant le taux d'insolubles ou de gel dans le métacrésol selon la méthode décrite précédemment après avoir laissé séjourné chaque échantillon dans une solution de HCl 0,1N contenant 500 ppm de catalyseur d'hydrolyse des fonctions alcoxysilanes tel que le dilaurate de dibutylétain (DLDBE) pendant des durées variables.

Les résultats sont réunis dans le Tableau 6.

Tableau 6

| EX | Nature du PA | Nature des greffons | Taux de greffage* | Taux de gel après un temps de séjour dans HCl 0,1 N de 0 h | 3 h | 6 h | 22 h |
|---|---|---|---|---|---|---|---|
| | PA-11 | - | 0 | 0 | 0 | 0 | 0 |
| 12 | PA-11 | VTMOEO | 0,0066 | 0 | 0,8 | 0,3 | 38,5 |
| 23 | PA-11 | GLYMO | 0,01 | 0 | 0,8 | 0,1 | 0 |
| | PA-12 | - | 0 | 0 | 0 | 0 | 0 |
| 19 | PA-12 | VTEO | 0,0018 | 0 | 52,8 | 59,2 | 91,2 |
| 24 | PA-12 | GLYMO | 0,0087 | 0 | 44,1 | 68,5 | 99,6 |

* exprimé en mole de greffon pour 100 g de polymère avant greffage

## Revendications

1. Polyamides thermoplastiques et élastomères thermoplastiques à base de polyamide comprenant des motifs aliphatiques, cycloaliphatiques et/ou aromatiques à tenue thermique améliorée, caractérisés en ce qu"ils sont greffés le long de la chaîne polymère avec des alcoxysilanes présentant au moins une insaturation de préférence des vinyltrialcoxysilanes de formule $CH_2=CH-Si-(OR)_3$ où R représente un groupement alkyle ou éventuellement substitué par un groupement alcoxyle.

2. Polyamides selon la revendication 1, caractérisés en ce que le rapport pondéral des greffons au polymère greffé est compris entre 0,1 et 5 %.

3. Polyamides selon la revendication 1 ou 2, caractérisés en ce que les greffons sont constitués de vinyltriméthoxysilane (VTMO), vinyltriéthoxysilane (VTEO) et/ou vinyltriméthoxyéthoxysilane (VTMOEO).

4. Procédé de greffage de polyamides thermoplastiques et d'élastomères thermoplastiques à base de polyamide avec des alcoxysilanes présentant au moins une insaturation, de préférence des vinyltrialcoxysilanes $CH_2=CH-Si-(OR)_3$ où R représente un groupement alkyle ou éventuellement substitué par un groupement alcoxyle, caractérisé en ce qu'on procède au greffage à l'état fondu des polyamides thermoplastiques et des élastomères thermoplastiques à base de polyamide en présence d'initiateur(s) radicalaire(s) dans une extrudeuse.

5. Procédé de greffage selon la revendication 4, caractérisé en ce que dans une première zone de l'extrudeuse, on procède à la fusion du PA par chauffage et dans une seconde zone, on introduit les réactifs - alcoxysilanes et initiateur(s) radicalaire(s)- au sein de la masse fondue de PA.

6. Procédé de greffage selon la revendication 5, caractérisé en ce qu'on dissout l'initiateur radicalaire dans l'alcoxysilane liquide avant de les introduire dans le PA à l'état fondu.

7. Procédé de greffage selon l'une quelconque des revendications 4 à 6, caractérisé en ce qu'on introduit les réactifs dans les PA en état de surfusion.

8. Polyamides thermoplastiques et élastomères thermoplastiques à base de polyamide greffés avec des alcoxysilanes présentant au moins une insaturation selon l'une quelconque des revendications 1 à 3, caractérisés en ce qu'ils sont réticulés et présentent un taux d'insolubles supérieur à 80 % mesuré à 90 °C dans le métacrésol.

9. Procédé de réticulation des polyamides thermoplastiques et élastomères thermoplastiques à base de polyamide greffés avec des alcoxysilanes présentant au moins une insaturation selon l'une quelconque des revendications 1 à 3, caractérisé en ce qu'ils sont hydrolysés à la vapeur d'eau à 100 °C ou en contact avec de l'eau pendant quelques heures.

10. Utilisation des polyamides thermoplastiques et des élastomères thermoplastiques à base de polyamide greffés selon l'une quelconque des revendications 1 à 3 éventuellement réticulés pour la réalisation d'objets moulés, extrudés tels que des tubes, gaines, films mono- et multicouches, pièces complexes, et de poudre pour le revêtement de substrats.

Office européen
des brevets

# RAPPORT DE RECHERCHE EUROPEENNE

Numero de la demande

EP 95 40 1313

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | PATENT ABSTRACTS OF JAPAN<br>vol. 006, no. 110 (C-109) 22 Juin 1982<br>& JP-A-57 040 556 (TEIJIN LTD) 6 Mars 1982<br>* abrégé * | 1-10 | C08G69/48<br>C08L101/10<br>C08K5/54 |
| X | US-A-4 783 511 (E. SCHMID) 8 Novembre 1988<br>* le document en entier * | 1-10 | |
| X | FR-A-2 595 367 (EMS-INVENTA) 11 Septembre 1987<br>* le document en entier * | 1-10 | |
| D,X | & DE-C-35 45 032 (EMS-INVENTA) 16 Avril 1987<br>* le document en entier * | 1-10 | |
| D,X | PATENT ABSTRACTS OF JAPAN<br>vol. 010, no. 103 (C-340) 18 Avril 1986<br>& JP-A-60 233 132 (KAO SEKKEN KK) 19 Novembre 1985<br>* abrégé * | 1 | |
| D,X | & DATABASE WPI<br>Section Ch, Week 8601,<br>Derwent Publications Ltd., London, GB;<br>Class A26, AN 86-004880<br>& JP-A-60 233 132 (KAO) 19 Novembre 1985<br>* abrégé * | 1 | DOMAINES TECHNIQUES RECHERCHES (Int.Cl.6)<br><br>C08G<br>C08L<br>C08K |
| D,X | PATENT ABSTRACTS OF JAPAN<br>vol. 009, no. 028 (C-264) 6 Février 1985<br>& JP-A-59 174 674 (KAO SEKKEN KK) 3 Octobre 1984<br>* abrégé * | 1 | |

Le présent rapport a été établi pour toutes les revendications

| Lieu de la recherche | Date d'achèvement de la recherche | Examinateur |
|---|---|---|
| LA HAYE | 17 Août 1995 | Leroy, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)